# DEMANDE DE BREVET EUROPEEN

(11) **EP 2 316 801 A1**
(43) Date de publication de la demande: **04.05.2011**
(21) Numéro de dépôt: 09173306.3
(22) Date de dépôt: 16.10.2009
(51) Int. Cl.: C03C 17/34, C03C 17/245

(54) **Feuille de verre revetue**

(71) Demandeur: AGC Glass Europe, 1170 Bruxelles (Watermael-Boitsfort) (BE)
(72) Inventeur: La désignation de l'inventeur n'a pas encore été déposée
(74) Mandataire: Le Vaguerèse, Sylvain Jacques

(57) **Abrégé**

L'invention concerne des feuilles de verre inorganique revêtues sur chacune de leurs faces, le revêtement d'une première face étant constitué d'au moins une couche dure et celui de l'autre face par au moins une couche réfléchissante durable exempte d'argent, leur procédé de fabrication par dépôt de la couche dure via une technique CVD et de la couche réfléchissante par pulvérisation sous vide assistée par magnétron.

Les feuilles sont utilisées pour réaliser des vitrages isolants du chaud ou du froid, ainsi que des vitrages décoratifs réfléchissant la lumière visible.

## Description

L'invention est relative au domaine des feuilles de verre revêtues de couches transparentes sur les deux faces ainsi qu'à leur procédé de fabrication et à leur utilisation.

Les systèmes de couches connus susceptibles d'être appliqués sur une feuille de verre sont principalement de deux types, à savoir, d'une part les couches « dures » pyrolytiques appliquées directement sur le ruban de verre à haute température pendant ou après le flottage du verre sur un bain d'étain en fusion dans le procédé « float » de fabrication de verre plat et, d'autre part, les empilages de couches « tendres » appliquées par pulvérisation cathodique sous vide.

Dans la demande de brevet européen EP 0637572 A il est divulgué une feuille de verre recouverte d'une couche basse émissive sur chacune de ses faces, l'une d'elles étant une couche dure pyrolytique et l'autre un empilage de couches tendres comprenant une couche d'argent métallique.

De telles feuilles de verre imposent cependant des contraintes lors de leur utilisation. En effet, les couches déposées par pulvérisation sont relativement fragiles et doivent rester protégées des agents chimiques ainsi que des intempéries atmosphériques. Lorsqu'on les met en oeuvre dans les vitrages multiples (c'est-à-dire comprenant plusieurs feuilles de verre), il faut veiller à ce que les couches tendres constituant l'empilage soient incorporées sur des surfaces de verre internes aux vitrages, de manière à les soustraire à l'action dégradante des agents externes.

L'invention vise à remédier aux inconvénients des feuilles de verre revêtues connues en fournissant notamment des feuilles qui soient insensibles aux agents chimiques et atmosphériques et qui puissent supporter une trempe thermique.

A cet effet, l'invention concerne une feuille de verre inorganique revêtue sur chacune de ses faces par un revêtement, le revêtement d'une première face étant constitué d'au moins une couche dure et celui de l'autre face par au moins une couche réfléchissante, selon laquelle la couche réfléchissante est une couche durable exempte d'argent.

L'invention concerne une feuille de verre inorganique. On entend par là une feuille de verre d'épaisseur d'au moins 0.5 mm et d'au plus 10 mm, comprenant du silicium comme l'un des constituants indispensables de la matière vitreuse. Les feuilles de verre organique constitué de matières plastiques plus ou moins transparentes comprenant des polymères à base de chaînes carbonées et/ou des polymères dérivés des silanes ne font pas partie de l'invention.

La feuille de verre conforme à l'invention est revêtue sur chacune de ses faces. Ce revêtement peut être réalisée sur la totalité de la surface de la feuille ou, au contraire ne recouvrir qu'une partie d'une face de celle-ci, au droit ou non de la partie revêtue portée par l'autre face. De préférence, la feuille de verre selon l'invention est revêtue sur la totalité de ses deux faces.

Le revêtement recouvrant l'une ou l'autre face de la feuille est constitué d'un film n'excédant pas 1 *µ*m d'épaisseur. Ce revêtement est transparent, ou au moins translucide, aux longueurs d'onde de la lumière visible, c'est-à-dire qu'il présente un taux de transmission lumineuse d'au moins 50% et, de préférence, d'au moins 60%, lorsqu'il est appliqué sur un verre float silico-sodo-calcique clair de 4 mm d'épaisseur, mesuré avec une source conforme à l'illuminant « lumière du jour » normalisé D65 par la CIE et sous un angle solide de 2°, selon la norme européenne EN410.

Selon l'invention, le revêtement d'une première face de la feuille de verre est constitué d'au moins une couche dure. Par couche dure, on entend désigner une couche résistante à la rayure, inaltérable par les agents chimiques présents dans l'environnement, notamment ceux de l**'**atmosphère dans une large gamme de températures correspondant aux conditions les plus extrêmes et dont les propriétés mécaniques sont en outre suffisamment élevées pour résister sans dommage aux traitements thermiques de bombage et de trempe. Ces couches dures sont généralement mises en oeuvre dans l'installation du procédé float de formation de la feuille de verre, par exemple par un procédé de dépôt chimique de pyrolyse en phase vapeur (en anglais "Chemical Vapor phase Deposition" ou, en abrégé, « CVD ») sur un ruban de verre en cours de fabrication. D'autres techniques de déposition sont aussi possibles pour la couche dure, comme la vaporisation (spray ou « PECVD »).

La feuille de verre conforme à l'invention est recouverte sur la deuxième face par une couche réfléchissante. On entend désigner ici par couche réfléchissante, une couche dont le taux de réflexion de la lumière visible mesuré sur la couche appliquée sur un verre float silico-sodo-calcique clair de 4 mm d'épaisseur est d'au moins 15 % selon la norme européenne EN 410 (angle solide de mesure de 2°).

Selon l'invention, la couche réfléchissante est une couche durable exempte d'argent. Par le vocable « durable », on entend désigner une couche dont la résistance mécanique s'approche de celle des couches dures telles que celles recouvrant la première face de la feuille de verre et qui peuvent être déposées postérieurement à la fabrication de cette feuille, hors de l'installation float. Ces couches durables sont déposées par pulvérisation cathodique et se distinguent par l'utilisation d'un système de couches tel que la résistance de ces systèmes soit sensiblement améliorée par rapport à celle des systèmes connus antérieurement.

De préférence, ces couches durables passent avec succès les tests de la norme européenne EN1096-2 qui décrivent la résistance mécanique et chimique de verre à couche de la catégorie définie « classe B » par la norme.

Selon une première forme de réalisation de la feuille de verre selon l'invention, le verre inorganique est un verre appartenant à la catégorie des verres silico-sodo-calciques. De tels verres ont une composition principale qui se situe dans les gammes suivantes, exprimées en % du poids de verre :

| | | | |
|---|---|---|---|
| SiO2 | 60 - 75 | MgO | 0 - 10 |
| Na2O | 10 - 20 | K2O | 0 - 10 |
| CaO | 0 - 16 | BaO | 0 - 2 |
| Al2O3 | 0 - 5 | | |
| avec BaO + CaO + MgO 10 - 20 | | | |
| et Na2O + K2O 10 - 20 | | | |

De préférence, le verre de la feuille selon l'invention est un verre flotté obtenu dans un procédé de flottage du verre en fusion sur une surface plane d'étain liquide, communément appelé procédé "float".

Le verre de la feuille est un verre clair ou un verre coloré dans sa masse au moyen d'une faible proportion d'au moins un oxyde métallique n'excédant pas 2 % en poids du verre total et, le plus souvent pas 0,5 % de ce poids. De tels oxydes sont, par exemple : FeO, Fe₂0₃, CoO, MnO et Cr₂O₃.

Suivant une forme de réalisation la couche dure du revêtement de la première face est une couche pyrolytique transparente à la lumière visible. La couche pyrolytique est une couche résultant d'un dépôt effectué à haute température sur le verre, c'est-à-dire de 500 à 750 °C pour un verre silico-sodo-calcique.

Des couches pyrolytiques préférées sont les couches bas-émissives qui comprennent au moins un oxyde métallique tel que choisi parmi les oxydes de Sn, In, Fe, Si, Ti, Cr, Co et leur mélanges. Ces oxydes sont parfois dopés au moyen d'une proportion minoritaire d'un autre élément tel que F, Sb, C et Al. Ces couches peuvent être mises en oeuvre directement sur le ruban de verre fondu ou en cours de solidification dans le procédé float, soit à l'intérieur du caisson de flottation du verre sur le bain d'étain fondu, soit après celui-ci. Deux procédés différents sont utilisés, à savoir : par pulvérisation de solutions de sels métalliques sur le ruban de verre, ou par dépôt chimique en phase vapeur (CVD), à partir de précurseurs gazeux. Dans un tel procédé, la couche dure est toujours située du côté "air" de la feuille de verre, c'est-à-dire le côté qui n'entre pas en contact avec la surface d'étain liquide.

Dans la réalisation de la feuille de verre conforme à l'invention, la couche réfléchissante durable comprend un oxyde de niobium, ou de tantale ou d'un mélange de ces oxydes, ou un oxyde de titane et d'au moins un oxyde d'un élément du groupe suivant : Al, Zr, Hf, V, Nb, Ta, Mn, Fe, Co, Ni, Cu, Cr et Si. De préférence, la feuille de verre conforme à l**'**invention porte la couche réfléchissante du côté "étain" de la feuille de verre float.

Les feuilles de verre préférées sont revêtues d'une couche réfléchissante comprenant un oxyde de titane et de zirconium. Le mélange d'oxyde de Ti et Zr est déposé par pulvérisation cathodique de préférence à partir de cibles céramiques d'oxyde de Zr et de Ti.

La couche superficielle peut aussi renfermer en très faible proportion, en général moins de 8% en poids et le plus souvent moins de 5% de composants additionnels. Ce sont notamment des éléments dopants dont le rôle est principalement d'améliorer la fabrication et/ou la mise en oeuvre des cathodes dans la production des couches dans les techniques de dépôt sous vide. Ces éléments traditionnellement sont destinés notamment à améliorer la conductibilité des matériaux constituant des cathodes tels que : Ti, Al. Il peut aussi s'agir de composés stabilisant certains constituants tels que Ca, Mg, ou encore d'éléments qui apparaissent comme indissociables d'autres lors de la préparation. C'est le cas des lanthanides comme l'oxyde d'yttrium ou de celui de hafnium.

L'épaisseur des couches réfléchissantes selon l'invention va généralement de 15 à 90 nm et, de préférence de 30 à 60 nm.

Une variante de réalisation de la feuille de verre conforme à l'invention est celle où le système comprenant la couche réfléchissante comprend aussi une sous-couche à base d'au moins un oxyde métallique, un nitrure métallique ou un oxynitrure métallique ou leur mélanges, interposée entre le substrat constitué par la feuille de verre et la couche réfléchissante et destinée notamment à constituer une barrière à la migration des ions alcalins à partir du substrat verrier, ou à améliorer les propriétés mécaniques du système de couches.

De préférence, cette sous-couche est elle-même une couche résultant d'un dépôt effectué par pulvérisation cathodique. Les sous-couches particulièrement préférées sont des sous-couches à base de SiO₂, des sous-couches à base de SiN ou de SiON, ou encore à base d'oxyde ou d'oxynitrure de titane avec une proportion limitée d'azote (N/O inférieur à 10%), ou encore des sous-couches à base de SnO₂. Des sous-couches de SnO₂ d'épaisseurs de 10 à 25 nm et, de préférence de 13 à 17 nm ont donné d'excellents résultats. Des sous-couches comprenant du SnO₂ en mélange avec un oxyde de Zn (jusqu'à 50% en poids d'oxyde de zinc) ont aussi donné de bons résultats.

Lorsque les couches additionnelles présentent un indice de réfraction peu élevé, comme par exemple pour SiO₂, leur épaisseur est choisie de préférence relativement plus faible que celle de la ou des couches réfléchissantes pour ne pas altérer les propriétés en question. Le chemin optique correspondant à cette couche barrière de faible indice avantageusement ne représente pas plus du tiers et de préférence pas plus du quart du chemin optique de l'ensemble des couches du système.

Avantageusement lorsqu'une ou plusieurs sous-couches sont utilisées pour contribuer aux propriétés réfléchissantes du système, elles sont choisies avec un indice de réfraction aussi élevé que possible et de préférence supérieur à 2,2. Différentes couches réfléchissantes sont utilisables en plus de la couche superficielle notamment les couches d'oxyde de titane, d'oxyde de niobium, oxyde de tantale, oxyde de zirconium éventuellement sous forme sous oxydée ou sous forme d'oxy-nitrures.

Contrairement à la couche superficielle dure, lorsqu'une sous-couche améliorant la réflexion est à base d'oxyde de titane, il n'est pas nécessaire de combiner cet oxyde avec des éléments qui en améliorent la résistance. Etant sous la couche réfléchissante par principe résistante, cette sous-couche, en elle même peut ne pas offrir les mêmes qualités. L'utilité d'une telle couche TiO₂ sans addition d'un autre oxyde réside dans l'indice élevé qu'il présente comparé à celui des oxydes mixtes de titane et d'au moins un autre métal. Ces oxydes mixtes, bien que formant une couche de réflexion significative, à épaisseur égale, réfléchissent moins que l'oxyde de titane seul. La combinaison d'une couche primaire d'oxyde de titane au contact du verre et d'une couche d'oxyde mixte de titane et d'un autre métal combine à la fois l'avantage globalement d'un indice de réfraction élevé et d'une bonne résistance superficielle.

L'utilisation d'une couche d'oxyde de titane d'indice élevé peut ne pas présenter cependant le meilleur ensemble de propriétés, en particulier de propriétés mécaniques. Les couches relativement épaisses de TiO₂ ne sont pas nécessairement les plus appropriées. Ceci peut encore conduire à limiter l'épaisseur de la couche sous-jacente de TiO₂ (ou TiOx, ou TiOxNy), d'autres couches à relativement fort indice complétant le système, y compris notamment une autre couche d'oxyde de titane mixte dont l'autre métal est de même nature ou différente de celle du métal de la couche superficielle.

Un ensemble typique comprend par exemple en plus de la couche superficielle très résistante, une ou plusieurs couches à fort indice de réfraction, et une couche barrière. Un ensemble de couches réfléchissantes de ce type est par exemple une succession de couches comprenant une couche superficielle à base d'une composition d'oxyde mixte de titane et de zirconium, au contact de celle-ci une couche d'oxyde de titane avantageusement déposée à partir d'un cathode céramique d'oxyde de titane éventuellement dopé, et conduisant à une couche d'oxyde légèrement sous-stoechiométrique, sous cette couche une autre couche d'oxyde mixte de titane et d'un autre oxyde du type de ceux pouvant intervenir dans la couche superficielle dure.

Des systèmes de couches sont notamment constitués de la façon suivante en partant du verre, les épaisseurs données entre parenthèses sont exprimées en nanomètres :
1. G/ SnO₂ (15)/TZO (50)
2. G/Si₃N₄ (17)/TZO (38)
3. G/SiO₂ (10)/TZO (50)
4. G/SnO₂ (10)/TaO (20)
5. G/SnO₂ (10)/TaNbO (20)
6. G/SnO₂ (10)/TiOx (10)/TZO (30)
7. G/SiO₂ (40)/TiOx (10)/TZO (30)

Dans ces systèmes TZO est une couche constituée d'un oxyde mixte de titane et de zirconium à 45% en poids de zirconium. Elle comprend en outre de l'oxyde d'yttrium (environ 6%) qui stabilise le zirconium. Eventuellement la couche comprend aussi des oxydes d'aluminium, de titane ou d'autres éléments qui incorporés aux cathodes améliorent leur conductibilité et par là, la stabilité de l'opération de dépôt. TiOx désigne l'oxyde de titane déposé à partir d'une cathode céramique, et présentant éventuellement une légère sous-stoechiométrie. TaNbO est un oxyde mixte de tantale et de niobium.

L'invention concerne aussi un procédé de fabrication d'une feuille de verre inorganique revêtue sur chacune de ses faces. Le procédé de fabrication selon l'invention comprend les étapes suivantes :
a) dépôt d'une couche dure sur la face air d'un ruban de verre à haute température dans une installation de production de verre selon le procédé float,
b) recuit, refroidissement et découpe du ruban de verre pour former des feuilles revêtues sur une première face par une couche dure,
c) stockage des feuilles découpées et revêtues sur une face,
d) convoyage des feuilles revêtues sur une première face vers une machine de revêtement,
e) revêtement de la deuxième face de la feuille de verre, ou face étain, par au moins une couche réfléchissante durable du type décrit précédemment.

Dans ce procédé, les termes identiques à ceux définis ou explicités plus haut pour la feuille de verre revêtue gardent en l'occurrence une même signification.

De préférence, dans le procédé conforme à l'invention, le dépôt de la couche dure s'effectue par un procédé de dépôt chimique en phase vapeur, ou procédé CVD.

On préfère aussi que dans ce procédé, la couche réfléchissante soit déposée sur la deuxième face de la feuille de verre par pulvérisation cathodique. De manière plus préférée encore, la couche réfléchissante est déposée par pulvérisation cathodique sous vide assistée par magnétron.

L'invention concerne enfin l'utilisation de la feuille de verre conforme à l'invention pour réaliser des vitrages isolant du chaud ou du froid.

Elle concerne en particulier l'utilisation de cette feuille pour la réalisation de vitrages destinés aux surfaces extérieures ou intérieures des bâtiments.

Une première forme de réalisation est l'utilisation des feuilles revêtues sur les deux faces conformes à l'invention pour réaliser des vitrages multiples, en particulier, des vitrages doubles ou triples. Des exemples sont les vitrages doubles et les vitrages triples utilisés pour isoler les bâtiments en hiver ainsi qu'en été dans les zones d'habitation à climat froid ou tempéré ou encore l'incorporation d'une telle feuille de verre dans les vitrages multiples montés sur les portes de fours ou de réfrigérateurs/congélateurs.

Dans les portes de fours électrodomestiques, les feuilles de verre selon l'invention sont particulièrement intéressantes pour les portes à 2 feuilles de verre (fours basse température), ainsi que dans les portes à 3 ou 4 feuilles de verre équipant les fours à haute température (fours à nettoyage par pyrolyse), mais dans ce dernier cas de préférence parmi les feuilles de verre autres que celle du verre côté intérieur du four, qui est généralement réalisée en verre borosilicate pour résister aux hautes températures sans donner lieu à dévitrification.

L'invention va aussi être décrite ci-dessous par des exemples dans l'industrie du bâtiment destinés à mieux l'illustrer, sans toutefois vouloir en limiter la portée.

### Exemple a) : Simple vitrage

Un vitrage simple constitué d'une feuille unique de verre silico-sodo-calcique clair de type "float" a été revêtue sur chacune de ses faces d'une part sur la face air d'une couche dure déposée à l'intérieur ou à l'extérieur à la sortie du caisson de flottage du verre lors de sa fabrication par la technique de dépôt chimique en phase vapeur ("CVD") et d'autre part, sur l'autre face (face étain) d'une couche réfléchissante d'oxyde de Ti et de Zr déposée par pulvérisation cathodique sous vide assistée par magnétron.

La couche pyrolysée est constituée d'oxyde d'étain dopée au fluor. Elle présente une épaisseur de 400nm. Le dépôt par pulvérisation cathodique consiste en une sous-couche SnO₂ de 15nm et une couche superficielle dure de l'oxyde mixte de titane et de zirconium décrit précédemment, d'épaisseur 43nm.

Ce vitrage simple a ensuite été soumis à diverses évaluations en conformité avec les principales normes européennes de mesure des propriétés des vitrages dans la construction. Les résultats des mesures sont donnés au Tableau 1 qui suit. Dans ce tableau et dans les tableaux qui suivent, les abréviations suivantes ont été utilisées:
Tv (visible) : Taux de transmission lumineuse (%) en lumière visible avec une source lumineuse D65 normalisée par la C.I.E et analysée sous un angle solide d'observation de 2° selon la norme EN410 ;
Tv (IR): Taux de transmission en lumière IR (%) selon la norme EN410;
R (visible): Taux de réflexion en lumière visible (%) selon la norme EN410;
R (IR): Taux de réflexion en lumière IR (%) selon la norme EN410;
g: Facteur solaire selon la norme EN410;
U: Coefficient de transmission thermique (W/(m2.K)) selon la norme EN410;
e: Emissivité selon la norme EN12898. ;
HRC : couche durable à haute réflexion d'oxyde mixte de titane et zirconium comme à l'exemple a) ci-dessus;
PC : couche pyrolytique de SnO₂ dopée au fluor (couche dure) comme à l'exemple a) ci-dessus;
P1: face située du côté opposé à la source de chaleur ou la source de froid;
P2: deuxième face de la feuille.

**Tableau 1 (Simple vitrage)**

| N° Exemple | Position | Nature | Tv (visible) | Tv (IR) | R (visible) | R (IR) | g | U | e |
|---|---|---|---|---|---|---|---|---|---|
| Ex. 1 | P1 | HRC | 58,3 | 46,9 | 31,5 | 18,6 | 56,1 | 3,58 | 0,11 |
| | P2 | PC | | | | | | | |
| Réf. 1 | P1 | HRC | 67,1 | 72,1 | 31,6 | 17,1 | 69,8 | 5,8 | 0,89 |
| | P2 | | | | | | | | |
| Réf. 2 | P1 | PC | 77,1 | 54,3 | 15,3 | 13,1 | 71,2 | 5,8 | 0,11 |
| | P2 | | | | | | | | |

Des verres de référence (Réf. 1 à Réf. 4) ont aussi fait l'objet des mêmes mesures et les résultats ont été incorporés au tableau 1.

On peut constater que les verres comprenant un revêtement de type HRC (Ex. 1 et Réf. 1) donnent les réflexions (visible) les plus élevées. Parmi ces verres, le verre de l'Ex. 1 conforme à l'invention a donné un coefficient de transmission thermique U parmi les plus bas, comparable à celui du verre de la Réf. 3 avec une couche dure sur la le face et un revêtement tendre à l'argent sur l'autre face. Ce coefficient de transmission thermique est par ailleurs sensiblement meilleur que celui du verre de la Réf. 1 qui ne possède qu'un revêtement HRC sur une seule de ses faces.

Quant au facteur solaire g, celui du verre de l'Ex. 1 est plus petit (meilleur) que ceux des verres des Réf.1 (1 seul HRC) et Réf. 2 (1 seul PC).

Enfin, l'émissivité de la couche HRC du verre de l'Ex. 1 selon l'invention est aussi basse (en fait, la même) que celle d'un verre ne portant qu'une seule couche dure PC sur une de ses faces.

### Exemple b): Double vitrage

On a réalisé des vitrages doubles (Ex. 2 et 3) dans lesquels un des deux verres était conforme à l'invention, à savoir un revêtement HRC déposé sur une face et un PC sur l'autre face d'un même verre.

Dans chacun des vitrages doubles testés, les positions P1 et P4 sont extérieures au vitrage et les positions P2 et P3 sont situées à l'intérieur de celui-ci, à l'abri de l'atmosphère extérieure.

Les mêmes mesures que dans l'Exemple 1 ont été effectuées. Les résultats sont donnés au Tableau 2 qui suit.

**Tableau 2 (Double vitrage)**

| N° Exemple | Position | Nature | Tv (visible) | R (visible) | Tv (IR) | R (IR) | g | U |
|---|---|---|---|---|---|---|---|---|
| Ex. 2 | P1 | HRC | 54,1 | 36,1 | 38,4 | 23,3 | 50,4 | 1,41 |
| | P2 | PC | | | | | | |
| | P3 | | | | | | | |
| | P4 | | | | | | | |
| Ex. 3 | P1 | | 54,1 | 34,8 | 38,4 | 19,4 | 61,1 | 1,40 |
| | P2 | | | | | | | |
| | P3 | PC | | | | | | |
| | P4 | H RC | | | | | | |

Lorsque le HRC est du côté de la source de chaleur ou de la source de froid (P4), on voit que l'on obtient (Ex. 3) les meilleures performances en réflexion du rayonnement IR (c'est-à-dire le taux de réflexion R(IR) le plus bas). Le coefficient de transmission thermique U est comparable pour un HRC en position P1 ou P4.

### Exemple c) : Triple vitrage

On a aussi réalisé des vitrages triples (Ex. 4 à 7) dans lesquels un des trois verres était conforme à l'invention, à savoir un HRC déposé sur une face et un PC sur l'autre face d'un même verre.

Les résultats ont été portés au Tableau 3 qui suit.

**Tableau 3 (Triple vitrage)**

| N° Exemple | Position | Nature | Tv (visible) | R (visible) | Tv (IR) | R (IR) | g | U |
|---|---|---|---|---|---|---|---|---|
| Ex. 4 | P1 | HRC | 49,9 | 40,5 | 31,1 | 24,5 | 46,5 | 1,08 |
| | P2 | PC | | | | | | |
| | P3 | | | | | | | |
| | P4 | | | | | | | |
| | P5 | | | | | | | |
| | P6 | | | | | | | |
| Ex. 5 | P1 | | 50,0 | 39,7 | 31,2 | 22,6 | 47,8 | 1,07 |
| | P2 | | | | | | | |
| | P3 | HRC | | | | | | |
| | P4 | PC | | | | | | |
| | P5 | | | | | | | |
| | P6 | | | | | | | |
| Ex. 6 | P1 | | 50,0 | 37,3 | 31,2 | 20,6 | 55,1 | 1,07 |
| | P2 | | | | | | | |
| | P3 | PC | | | | | | |
| | P4 | HRC | | | | | | |
| | P5 | | | | | | | |
| | P6 | | | | | | | |
| Ex. 7 | P1 | | 49,2 | 36,9 | 31,1 | 20,1 | 55,4 | 1,07 |
| | P2 | | | | | | | |
| | P3 | | | | | | | |
| | P4 | | | | | | | |
| | P5 | PC | | | | | | |
| | P6 | HRC | | | | | | |

De même que pour le double vitrage, on constate ici que les meilleures performances sont obtenues lorsque le HRC est situé du côté de la source de chaleur ou de la source du froid (Ex. 7). Des situations dans lesquelles le HRC recouvre un verre intérieur au vitrage (Ex. 5 et 6) donnent des résultats intermédiaires entre ceux du meilleur exemple (Ex. 7) et ceux où le HRC est situé du côté de l'ambiance extérieure à la source de chaleur/froid (Ex. 4).

En ce qui concerne la position du revêtement HRC, on constate que plus il est proche de la source de chaleur ou du froid (P6), plus basse est la réflexion IR: le vitrage de l'Ex. 7 est le meilleur en termes de taux de réflexion IR.

## Revendications

1. Feuille de verre inorganique revêtue sur chacune de ses faces, le revêtement d'une première face étant constitué d'au moins une couche dure et celui de l'autre face par au moins une couche réfléchissante, **caractérisée en ce que** la couche réfléchissante est une couche durable déposée par pulvérisation cathodique.

2. Feuille de verre selon la revendication précédente **caractérisée en ce que** le verre inorganique est un verre silico-sodo-calcique clair ou coloré dans la masse.

3. Feuille de verre selon une quelconque des revendications précédentes, **caractérisée en ce que** la couche dure de la première face est une couche pyrolytique transparente à la lumière visible.

4. Feuille de verre selon la revendication 3 dans laquelle la couche dure est une couche d'oxyde d'étain dopée au fluor ou à l'antimoine.

5. Feuille de verre selon une quelconque des revendications précédentes, **caractérisée en ce que** la couche réfléchissante durable comprend un oxyde de niobium, ou un oxyde de tantale ou des mélanges de ces oxydes, ou un oxyde de titane et d'au moins un oxyde d'un élément du groupe suivant : Al, Zr, Hf, V, Nb, Ta, Mn, Fe, Co, Ni, Cr, Cu et Si.

6. Feuille de verre selon la revendication précédente, **caractérisée en ce que** la couche réfléchissante comprend un mélange d'oxyde de titane et de zirconium.

7. Feuille de verre selon une quelconque des revendications précédentes, **caractérisée en ce que** le revêtement comprenant la couche réfléchissante comprend aussi au moins une sous-couche à base d'un oxyde métallique, d'un nitrure métallique ou d'un oxynitrure métallique interposée entre le substrat constitué par la feuille de verre et la couche réfléchissante.

8. Feuille de verre selon la revendication précédente, **caractérisée en ce que** la sous-couche est une couche à base d'oxyde d'étain pur ou en mélange avec un oxyde de zinc la teneur en oxyde de zinc pouvant aller jusqu'à 50% en poids.

9. Feuille de verre selon la revendication 8 **caractérisé en ce que** la sous-couche additionnelle est constituée d'oxyde, de nitrure ou d'oxynitrure de silicium.

10. Feuille de verre selon l'une des revendications précédentes comprenant au moins une autre couche réfléchissante à base d'oxyde, de tantale de niobium, ou de titane éventuellement sous-oxydé ou d'oxynitrure de titane avec un taux N/O inférieur à 10%.

11. Utilisation d'une feuille de verre selon une quelconque des revendications 1 à 10 pour réaliser des vitrages isolant du chaud ou du froid.

12. Utilisation d'une feuille de verre selon une quelconque des revendications 1 à 10 pour la réalisation de vitrages destinés aux surfaces extérieures ou intérieures des bâtiments.

13. Utilisation d'une feuille de verre selon une quelconque des revendications 1 à 10 comme feuille de verre extérieur ou interne au vitrage de la porte des fours électrodomestiques.
